Europäisches Patentamt

European Patent Office

Office européen des brevets

(19)

(11) Veröffentlichungsnummer: **0 014 417**
**B1**

(12) **EUROPÄISCHE PATENTSCHRIFT**

(45) Veröffentlichungstag der Patentschrift:
**09.12.81**

(51) Int. Cl.³: **F 16 D 65/66, B 61 H 15/00**

(21) Anmeldenummer: **80100435.9**

(22) Anmeldetag: **29.01.80**

(54) **Selbsttätige Bremsgestänge-Nachstellvorrichtung für Fahrzeugbremsen, insbesondere Schienenfahrzeugbremsen.**

(30) Priorität: **02.02.79 DE 2904028**

(43) Veröffentlichungstag der Anmeldung:
**20.08.80 Patentblatt 80/17**

(45) Bekanntmachung des Hinweises auf die Patenterteilung:
**09.12.81 Patentblatt 81/49**

(84) Benannte Vertragsstaaten:
**CH FR GB IT SE**

(56) Entgegenhaltungen:
**DE-B-1 455 292**
**DE-B-2 201 982**
**DE-C-641 591**
**DE-A-3 326 335**

(73) Patentinhaber: **Knorr-Bremse, Moosacher Strasse 80,
D-8000 München 40 (DE)**

(72) Erfinder: **Sander, Nils Börje Lennart, Torpslingan 3,
S-28300 Osby (SE)**
Erfinder: **Nadas, Julius, Trezzanostrasse 13,
D-8057 Eching (DE)**

Selbsttätige Bremsgestänge-Nachstellvorrichtung für Fahrzeugbremsen, insbesondere Schienenfahr-zeugbremsen

Die Erfindung bezieht sich auf eine selbsttätige Bremsgestänge-Nachstellvorrichtung für Fahr-zeugbremsen, insbesondere Schienenfahrzeug-bremsen, mit zwei teleskopisch zueinander ver-schiebbaren, die Bremskraft übertragenden Ge-stängeteilen und einer Verbindungsvorrichtung zwischen diesen, wobei die Verbindungsvorrichtung eine eine Gewindespindel und wenigstens eine mit dieser über ein nichtselbsthemmendes Gewinde verschraubte Mutter umfassende Verschraubung mit einem undrehbar und einem drehbar gelagerten Verschraubungsteil aufweist, wobei zwischen das drehbare Verschraubungsteil und ein drehfestes Teil eine in Schliessrichtung von wenigstens einer Feder belastete, durch Axialverschiebung des drehbaren Verschraubungsteils relativ zum drehfesten Teil schaltbare Drehkupplung eingeordnet ist, und wobei das drehbare Verschraubungsteil in Verschieberichtung zum Öffnen der Drehkupplung mit einer entgegen der Bremskraftrichtung wirkenden, sich nach einem Sollhub schliessenden, ein Federglied und eine Hebeleinrichtung aufweisenden Steueranschlageinrichtung koppelbar ist, die sich an einem proportional dem Bremshub relativ zu dem drehbaren Verschraubungsteil verschieblichen Bezugsteil abstützt.

Eine derartige Bremsgestänge-Nachstellvorrichtung ist beispielsweise mit der DE-B 1 455 292 bekanntgeworden. Die Nachstellvorrichtung ist hierbei als Zugstange in ein übliches H-Bremsgestänge eingeordnet, wobei das eine Gestängeteil als Gewindespindel mit nichtselbsthemmendem Gewinde ausgebildet ist und somit zugleich ein Verschraubungsteil darstellt. Das andere Gestängeteil ist rohrartig und die Gewindespindel sowie eine mit dieser verschraubte Mutter umfassend ausgebildet; zu beiden Seiten der Mutter sind Kupplungsflächen vorgesehen, die mit entsprechenden Gegenflächen am zugleich als drehfestes Teil dienenden, zweiten Ge-stängeteil kuppelbar sind. Die Steueranschlagein-richtung weist einen Hebel auf, der einerseits an einem Festpunkt, anderseits versetzt zur Nachstellvorrichtung an einem Bremshebel des H-Bremsgestänges angelenkt ist. Im mittleren Bereich des Hebels greift eine Stange an, welche über einen vorgespannten Federspeicher, der koaxial in die Nachstellvorrichtung integriert ist, diesen nachgeordneten Stösseln und ein Axiallager in einer einen bestimmten Sollhub entsprechenden Stellung des H-Bremsgestänges mit der Mutter in Löserichtung einer ansonsten durch Federkraft geschlossenen Drehkupplung kuppelbar ist. Im den Sollhub überschreitenden Bremshubbereich wird der Federspeicher komprimiert und nimmt dabei einen bestimmten Anteil der von einem Bremszylinder auf H-Bremsgestänge ausgeübten Bremskraft auf. Da die Vorspannung des Federspeichers höher als die Schliesskraft der die Drehkupplung in Schliessrichtung belastenden Federn, deren Kraft jedoch im Hinblick auf das sichere Geschlossenhalten der Drehkupplung im Lösezustand der Bremsen und auch im Hinblick auf bestimmte Nachstellfunktionen der Nachstellvorrichtung einen bestimmten Mindestwert erreichen muss, nimmt der Federspeicher hierbei einen beachtlichen Anteil der Bremskraft auf.

Mit der US-A 3 326 335 ist eine selbsttätige Bremsgestänge-Nachstellvorrichtung bekanntgeworden, bei welcher ein hülsenartiges, undrehbares Gestängeteil mit einer Mutter als undrehbares Verschraubungsteil verbunden ist. Die Mutter ist über ein nichtselbsthemmendes Gewinde mit einer Gewindespindel verschraubt, deren dem anderen Gestängeteil zugewandtes Ende einen Kupplungsflansch mit beidseitigen Kupplungsflächen trägt. Der Kupplungsflansch ist vom anderen, rohrartigen Gestängeteil übergriffen; beidseitig des Kupplungsflansches sind an die-sem andern Gestängeteil Gegenkupplungsflä-chen vorgesehen. Auf dem anderen Gestängeteil ist eine zu diesem koaxiale Muffe gegen die Kraft einer vorgespannten Feder verschieblich gelagert; die Muffe ist über eine Anschlagvorrichtung mit einem dem Sollhub proportionalen Spiel mit dem Bezugsteil koppelbar. Die erwähnte Feder stützt sich einerseits gegen das eine Gestängeteil und anderseits über axialverschiebliche Stössel und Übersetzungshebel gegen ein auf der Gewindespindel angeordnetes Axiallager ab, wobei sie die eine Drehkupplung zwischen dem Kupplungsflansch und dem anderen Gestängeteil in Schliessrichtung belastet. Nach dem Sollhub und Schliessen des Anschlages ist durch Verschieben der Muffe die Feder von den Stösseln abhebbar. Die Übersetzungshebel bewirken hierbei eine Steigerung der von der Feder auf die Drehkupplung ausgeübten Schliesskraft. Hierdurch soll erreicht werden, dass die Feder zum einen relativ schwach sein kann und somit bei ihrer Kompression nur einen geringen Anteil der Bremskraft aufnimmt, zum anderen aber eine ausreichend hohe Schliesskraft auf die Drehkupplung ausübt. Die baulichen Verhältnisse lassen hierbei jedoch nur ein Hebelverhältnis von höchstens 1:2 zu, so dass die von der Feder ausgeübte Kraft maximal verdoppelt als Schliesskraft auf die Drehkupplung wirken kann. Ausserdem ist diese Anordnung nur bei einer bestimmten Bauart für Bremsgestänge-Nachstellvorrichtungen verwendbar.

Die vorstehend erwähnten, bekannten Brems-gestänge-Nachstellvorrichtungen sind als geson-derte Bauteile in Bremsgestänge einsetzbar und werden von der Bremskraft auf Zug beansprucht. Es sind aber auch bereits in Bremszylinder eingebaute Bremsgestänge-Nachstellvorrichtungen mit im wesentlichen den eingangs genannten Merkmalen bekannt, welche von der Bremskraft auf Druck beansprucht werden. So zeigt beispielsweise die DE-B 2 201 082 einen Bremszylinder, dessen Kolben einen mit zwei Kupplungsflächen einen Kupplungsflansch einer drehbaren Gewindespindel umfassenden Rohransatz trägt. Weiterhin stützt sich gegen den Kolben eine Druckfeder ab, welche anderseits ein die Kolbenstange darstellendes Gestängeteil belastet. Die Kolbenstange ist rohrartig, die Gewindespindel umfassend ausgebildet; an ihrem kolbenseitigen Ende trägt sie eine über ein nichtselbsthemmendes Gewinde mit der Gewindespindel verschraubte Mutter. Im Lösezustand des Bremszylinders belastet die Druckfeder eine zwischen dem Kupplungsflansch der Gewindespindel und dem Rohransatz des Kolbens gebildete Drehkupplung in Schliessrichtung. Auf einem zylindrischen Absatz der Gewindespindel ist begrenzt axialverschieblich eine Steuerscheibe angeordnet, welche einerseits über eine Zwischenscheibe und ein Axiallager gegen den Kupplungsflansch abgestützt ist und welche anderseits bei gelöster Bremse mit einem dem Sollhub entsprechenden Abstand einem gehäusefesten Anschlag gegenübersteht. Die Steuerscheibe dient dazu, während eines Bremshubes nach Schliessen des Anschlages die Drehkupplung entgegen der Kraft der Druckfeder zu öffnen; der restliche Bremshub nach Öffnen der Drehkupplung ist durch elastische Verformung der Steuerscheibe bzw. der Zwischenscheibe aufzunehmen. Dieser elastischen Verformung müssen die beiden Scheiben einen Widerstand entgegensetzen, der die Vorspannung der Druckfeder übersteigt und welcher somit einen beachtlichen Teil der vom Kolben des Bremszylinders ausgeübten Bremskraft zu einer Überwindung erfordert. Der Bremszylinder weist daher einen nur niedrigen Wirkungsgrad auf.

Der Erfindung liegt die Aufgabe zugrunde, eine selbsttätige Bremsgestänge-Nachstellvorrichtung der eingangs genannten Art so auszubilden, dass sie nach wie vor für unterschiedliche Bauarten geeignet ist, die Steueranschlageinrichtung jedoch nur einen geringen Anteil der Bremskraft aufnimmt und die Bremsgestänge-Nachstellvorrichtung somit die Voraussetzung für einen hohen Wirkungsgrad aufweist.

Die Konstruktion soll dabei einfach, billig und robust bleiben.

Diese Aufgabe wird nach der Erfindung dadurch gelöst, dass im Kraftfluss der Steueranschlageinrichtung vom Bezugsteil zum drehbaren Verschraubungsteil wenigstens ein dem Federglied nachgeordneter Übersetzungshebel mit einem die vom Federglied auf das drehbare Verschraubungsteil übertragbare Kraft vergrössernden Übersetzungsverhältnis vorgesehen ist. Hierdurch wird erreicht, dass nur ein relativ schwaches Federglied erforderlich ist, um die Drehkupplung gegen ihre starke, in Schliessrichtung wirkende Federbelastung zu öffnen. Im auf das Öffnen der Drehkupplung folgenden Hubbereich wird das schwache Federglied komprimiert, wozu nur ein geringer Anteil der von der Bremsgestänge-Nachstellvorrichtung zu übertragenden Bremskraft erforderlich ist. Die Bremsgestänge-Nachstellvorrichtung kann daher einen hohen Wirkungsgrad aufweisen.

Nach weiteren Merkmalen der Erfindung kann es vorteilhaft sein, wenn der Übersetzungshebel mittel- oder unmittelbar mit seinem einen Ende am Federglied, seinem anderen Ende am drehfesten Teil und dazwischen am drehbaren Verschraubungsteil gelagert ist, und wenn weiterhin der Übersetzungshebel zwischen den Lagerungen am Federglied und am drehbaren Verschraubungsteil eine grössere und zwischen der Lagerung am drehbaren Verschraubungsteil und am drehfesten Teil eine kleinere Hebellänge aufweist.

Eine nach weiteren Merkmalen der Erfindung vorteilhafte Ausgestaltung der Bremsgestänge-Nachstellvorrichtung ist hierbei erreichbar, wenn das Federglied als vorgespannter Federzylinder zu den Gestängeteilen parallel neben diesen angeordnet ist, wenn das Eingangsglied des Federspeichers über eine ein dem Sollhub proportionales Spiel aufweisende Anschlagkupplung mit dem Bezugsteil gekoppelt und das Ausgangsglied des Federspeichers an einem Ende des zu diesem im wesentlichen senkrecht verlaufenden Übersetzungshebels angelenkt ist, wenn das andere Ende des Übersetzungshebels am drehfest gehaltenen, einen Stangenteil angelenkt ist, und wenn zwischen diesen beiden Anlenkungen der Übersetzungshebel mit einem im Stangenteil axialverschieblich gelagerten und in Wirkverbindung mit dem drehbaren Verschraubungsteil stehenden Bolzen gekoppelt ist. Dabei ist es vorteilhaft, wenn der Bolzen einerseits an einem mit dem Übersetzungshebel verbundenen Querbolzen, der das Stangenteil in einem zu diesem quer verlaufenden Langloch verschieblich durchsetzt, und anderseits an einem sich gegen das drehbare Verschraubungsteil abstützenden Axiallager mittel- oder unmittelbar anliegt.

Nach anderen Merkmalen der Erfindung kann auch dadurch eine vorteilhafte Ausgestaltung der Bremsgestänge-Nachstellvorrichtung erreicht werden, dass der Übersetzungshebel als zu dem drehbaren Verschraubungsteil koaxiale Kegelringscheibe mit veränderlichem Kegelwinkel ausgebildet ist, die an ihren beiden Rändern mittel- oder unmittelbar am Federglied bzw. am einen, das drehfeste Teil bildenden Gestängeteil und zwischen den Rändern am drehbaren Verschraubungsteil gelagert ist, wobei die Lagerstellen koaxial zum Verschraubungsteil ringförmig ausgebildet sind. Hierdurch ergibt sich eine in die Bremsgestänge-Nachstellvorrichtung integrierte und daher gut geschützte Anordnung des ringscheibenartigen Übersetzungshebels.

Dabei kann es nach weiteren Merkmalen der Erfindung zweckmässig sein, wenn die Lagerstellen der Kegelringscheibe als an dieser anliegende Drahtringe ausgebildet sind, wenn die Kegelringscheibe radiale, von einem Rand ausgehende und bis nahe zum anderen Rand reichende Schlitze aufweist, wobei in Umfangsrichtung gesehen aufeinanderfolgende Schlitze zweckmässig abwechselnd vom radialinneren und vom radialäusseren Rand ausgehen. Dabei kann das Federglied als vorgespannter Federspeicher zu den Gestängeteilen parallel neben diesen angeordnet sein, das Eingangsglied des Federspeichers über eine ein dem Sollhub proportionales Spiel aufweisende Anschlagkupplung mit dem Bezugsteil gekoppelt und das Ausgangsglied des Federspeichers mit einer an wenigstens einem der Gestängeteile axialverschieblich gelagerten Muffe verbunden sein und die Muffe mit einer randnahen Lagerstelle der Kegelringscheibe gekoppelt sein. Hierbei ist es nach einem weiteren Merkmal der Erfindung zweckmässig, wenn die Muffe auf dem das drehfeste Teil bildenden Gestängeteil axialverschieblich gelagert und mittels eine Radialwand axialverschieblich durchsetzenden Stösseln mit einem im Gestängeteil axialverschieblich gelagerten Lagerring gekoppelt ist, wobei der Lagerring die nahe des radialinneren Randes der Kegelringscheibe befindliche Lagerstelle bildet.

Nach weiterer Merkmalen der Erfindung ist eine vorteilhafte Ausgestaltung der Bremsgestänge-Nachstellvorrichtung dadurch möglich, dass auf wenigstens einem der Gestängeteile eine über eine ein dem Sollhub proportionales Spiel aufweisende Anschlagkupplung mit dem Bezugsteil koppelbare Muffe axialverschieblich gelagert ist, dass in einem Ringraum zwischen der Muffe und dem Gestängeteil eine vorgespannte Feder angeordnet ist, die sich einerseits gegen die in Wirkrichtung der Feder gegen das Gestängeteil mittels eines Anschlages abgefangene Muffe und anderseits gegen einen zum Gehäuseteil axialverschieblichen Lagerring abstützt, der eine randnahe Lagerstelle des Kegelringes bildet. Falls das drehbare Verschraubungsteil ein Axiallager trägt, das von einer in Schliessrichtung der Drehkupplung wirkenden Feder belastbar ist, kann es dabei weiterhin zweckmässig sein, wenn an der auf der Feder abgewandten Seite des Axiallagers angeordneten Kegelringscheibe zwischen deren Randbereichen ein weiterer, relativ zum Gestängeteil axialverschieblicher Kupplungsring anliegt, der mit einem das Axiallager axialverschieblich übergreifenden Rohrteil gekoppelt ist, dessen Ende einen zwischen die Feder und das Axiallager eingreifenden Ringflansch trägt.

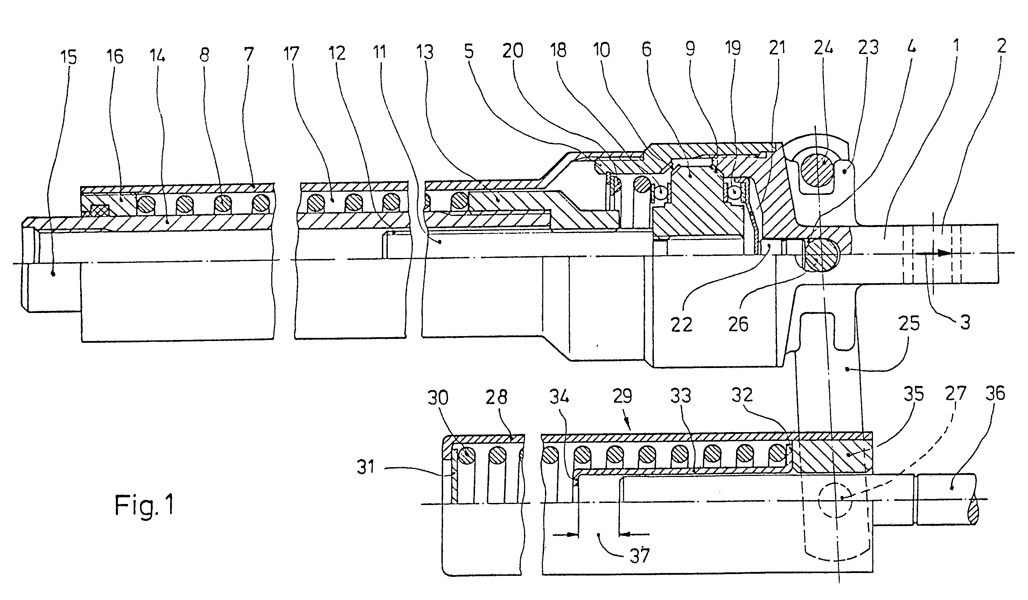

Aufgabengemäss ist die Erfindung für unterschiedliche Bauarten von Bremgestänge-Nachstellvorrichtungen der eingangs genannten Art verwendbar. Um dies zu verdeutlichen, sind in der Zeichnung Fig. 1 bis 4 beispielsweise Bauarten von nach der Erfindung ausgebildeten Bremsgestänge-Nachstellvorrichtungen schematisch dargestellt.

Die wie üblich zugstangenartig ausgebildete Bremsgestänge-Nachstellvorrichtung nach Fig. 1 weist ein Gestängeteil 1 auf, das mittels eines Anschlussauges 2 in bekannter, nichtdargestellter Weise gegebenenfalls über weitere Bremsgestängeteile derart mit einem ebenfalls nichtgezeigten Bremszylinder zu koppeln ist, dass die vom Bremszylinder ausübbare Bremskraft in Richtung des Pfeiles 3 auf es übertragen wird. Über das Anschlussauge 2 wird dabei das Gestängeteil 1 um seine Längsachse undrehbar gehalten. Das Gestängeteil 1 ist quer von einem in seiner Längsrichtung verlaufenden Langloch 4 durchsetzt. Weiterhin weist das Gestängeteil 1 einen Rohransatz 5 auf, der einen Kupplungsflansch 6 übergreift und in eine Hülse 7 übergeht, in welcher eine vorgespannte Vorspannfeder 8 angeordnet ist. Beidseitig des Kupplungsflansches 6 sind zwischen diesem und dem Rohransatz 5 gegebenenfalls verzahnt ausgebildete, konische Drehkupplungen 9 bzw. 10 ausgebildet, die durch relative Axialverschiebung des Kupplungsflansches 6 zum Rohransatz 5 schaltbar sind; bei geschlossener einer Drehkupplung 9 bzw. 10 ist die jeweils andere Drehkupplung 10 bzw. 9 um ein bestimmtes Lüftspiel geöffnet. Der Kupplungsflansch 6 befindet sich am anschlussaugenseitigen Ende einer in die Hülse 7 ragenden Gewindespindel 11, die vermittels eines nichtselbsthemmenden Gewindes 12 mit einer Mutter 13 verschraubt ist. Die Vorspannfeder 8 ist zwischen das dem Anschlussauge 2 abgewandte Ende der Hülse 7 und die Mutter 13 eingespannt. Die Mutter 13 ist vermittels eines die Gewindespindel 11 mit Spiel umgreifenden Rohres 14 mit einem stangenartigen, zweiten Gestängeteil 15 verbunden, welches am dem Anschlussauge 2 abgewandten Ende der Hülse 7 in deren Abschlussring 16 verschmutzungsgeschützt verschieblich gelagert ist und an seinem nichtdargestellten Ende, wie üblich, um seine Längsachse undrehbar mit den Bremsgliedern einer nichtdargestellten Reibungsbremse gekoppelt ist.

Die Vorspannfeder 8 befindet sich dabei in einem Ringraum 17 zwischen der Hülse 7 und dem Rohr 14 bzw. dem Gestängeteil 15.

Der Kupplungsflansch 6 trägt beidseitig Axiallager 18 bzw. 19; das dem Anschlussauge 2 abgewandte Axiallager 18 ist über eine vorgespannte Kupplungsfeder 20 gegen den Rohransatz abgestützt und am anderseitigen Axiallager 19 liegt ein im Rohransatz 5 verschieblich gelagerter und die anschlussaugenseitige Stirnfläche des Kupplungsflansches überdeckender Druckteller 21 an. Auf der dem Kupplungsflansch 6 abgewandten Seite liegt am Druckteller 21 ein in einer Axialbohrung des Gestängeteils 1 verschieblich gelagerter Druckstössel 22 an, der bis in das Langloch 5 reicht.

Das Gestängeteil 1 ist mit einem radial auskragenden Lagerauge 23 versehen, in welchem mit zum Gestängeteil 1 radialem Spiel ein Querbolzen 24 gelagert ist. Der Querbolzen 24 befindet sich an einem Ende eines Übersetzungshebels 25, der das Gestängeteil 1 im wesentlichen senkrecht überkreuzt. Das Langloch 4 ist von einem weiteren Querbolzen 26 durchgriffen, der ebenfalls mit dem Übersetzungshebel 25 verbunden ist und an dessen dem Lagerauge 2 abgewandter Seite der Druckstössel 22 anliegt. Am zweiten Ende des Übersetzungshebels 25 ist mittels Lagerbolzen 27 das Gehäuse 28 eines Federgliedes 29 angelenkt. Zwischen dem Querbolzen 26 und dem Lagerbolzen 27 weist der Übersetzungshebel 25 eine grössere Hebellänge auf als zwischen den beiden Querbolzen 24 und 25.

Im im wesentlichen parallel zum Gestängeteil 1 verlaufenden Gehäuse 28 des Federgliedes 29 befindet sich eine im Vergleich zur Vorspannfeder 8 und zur Kupplungsfeder 20 schwache, vorgespannte Feder 30, die sich einerseits am Boden 31 des Gehäuses 28 und anderseits an einem Aussenringflansch 32 eines Rohrteils 33 abstützt. Das Rohrteil 33 erstreckt sich innerhalb der Feder 30 in Richtung zum Boden 31 und endet mit einem Innenringflansch 34. Ein das Gehäuse 28 im Bereich der Anlenkung des Übersetzungshebels 25 verstärkender Verschlussring 35 hindert das Rohrteil 33 an einem Austreten aus dem Gehäuse 28. Ein den Verschlussring durchragendes, stösselartiges Bezugsteil 36 greift axialverschieblich in das Rohrteil 33 ein und endet in einem Abstand 37 vor dem Innenringflansch 34. Das Bezugsteil 36 ist in nichtdargestellter, üblicher Weise am Fahrzeugrahmen oder einem Hebel des Bremsgestänges derart angelenkt, dass es während des Bremsens eine dem Bremshub proportionle Verschiebung relativ zum Gestängeteil 1 und entgegen der Richtung des Pfeils 3 erfährt. Das Bezugsteil 36 ist zweckmässig in nichtdargestellter Weise justierbar, derart, dass seine Lage relativ zum Gestängeteil 1 und damit auch bei unveränderlicher Lage des Übersetzungshebels 25 der Abstand 37 einstellbar ist.

Bei gelöster Bremse nehmen alle Teile der Bremsgestänge-Nachstellvorrichtung die aus Fig. 1 ersichtlichen Lagen ein. Die Drehkupplung 9 wird dabei von der Summe der Kräfte der Vorspannfeder 8 der Kupplungsfeder 20 mit grosser Kraft geschlossen gehalten.

Zum Bremsen bei richtig justiertem Lüftspiel der Fahrzeugbremsen wird die Bremsgestänge-Nachstellvorrichtung als Einheit in Richtung des Pfeils 3 gemäss Fig. 1 nach rechts verschoben, wobei über den keine Drehung erfahrenden Übersetzungshebel das Gehäuse 28 des Federgliedes 29 mitgenommen wird und sich der Innenringflansch 34 somit dem Ende des Bezugsteils 36 unter Verkleinern des Abstandes 37 annähert. Beim Anlegen der Bremsen schlägt der Innenringflansch 34 gerade an das Bezugsteil 36 an. Bei der Weiterbewegung des Gestängeteils 2 erfährt daher zum einen das Gestängeteil 15 einen Bewegungswiderstand, welcher rasch die Vorspannkraft der Vorspannfeder 8 übersteigt und über die Mutter 13 die Gewindespindel 11 mit den Kupplungsflansch 6 zurückhält, wodurch die Drehkupplung 9 geöffnet und wie nachfolgend beschrieben, die Drehkupplung 10 geschlossen wird. Anderseits wird gleichzeitig hierzu vom Bezugsteil 36 über das Rohrteil 33 und die Feder 30 das Gehäuse 28 des Federgliedes 29 zurückgehalten, wodurch bei der Weiterbewegung des Gestängeteils 1 der Übersetzungshebel 25 um den Querbolzen 24 im Uhrzeigersinn gedreht wird und dabei den Querbolzen 26 im Langloch 4 entgegen der Richtung des Pfeils 3 verschiebt, wobei über den Druckstössel 22 der Druckteller 21 vermittels des Axiallagers 19 an den Kupplungsflansch 6 angelegt bleibt und die Drehkupplung 10 schliesst. Beim weiteren, durch elastische Verformung des Bremsgestänges bedingten Bremshub nimmt das sich weiterhin in Richtung des Pfeils 3 verschiebende Gestängeteil 1 über die unter der Bremskraft geschlossen gehaltene Drehkupplung 10, den Kupplungsflansch 6, die Gewindespindel 11, die Mutter 13 und das Rohr 14 das Gestängeteil 15 mit und spannt die Fahrzeugbremse fest zu. Über die Querbolzen 25 und 26 wird auch der Übersetzungshebel 25 in seiner nunmehrigen Drehlage mitgenommen, wodurch das Gehäuse 28 eine Verschiebung in Richtung des Pfeils 3 erfährt und die durch das Bezugsteil 36 und das Rohrteil 33 einerseits zurückgehaltene Feder 30 komprimiert wird. Da die Feder 30 relativ schwach ist, nimmt sie nur einen sehr geringen Anteil der auf das Gestängeteil 1 wirkenden Bremskraft auf, so dass nahezu die gesamte Bremskraft vom Gestängeteil 1 auf das Gestängeteil 15 übertragen wird, die Bremsgestänge-Nachstellvorrichtung also nur einen vernachlässigbar kleinen Bremskraftverlust bedingt und somit einen hohen Wirkungsgrad aufweist.

Beim Bremsen mit zu grossem Lösespiel der Fahrzeugbremse wird anfänglich die gesamte Bremsgestänge-Nachstellvorrichtung, wie vorstehend beschrieben, in Richtung des Pfeils 3 gemäss Fig. 1 nach rechts verschoben, bis der Innenringflansch 34 am Bezugsteil 36 anschlägt und das Rohrteil 33 über den Aussenringflansch 32 das rechte Ende der Feder 30 zurückhält. Infolge des zu grossen Lösespiels sind hierbei die Bremsen noch nicht angelegt. Bei der weiteren Verschiebung des Gestängeteils 1 vermag die schwache Feder 30 das Gehäuse des Federgliedes 29 unter Drehen des Übersetzungshebels 25 um den Querbolzen 24 zurückzuhalten, wobei über den sich im Langloch 4 relativ zum Gestängeteil 1 nach links verschiebenden Querbolzen 26, den Druckstössel 22 und den Druckteller 21 auch der Kupplungsflansch 6 mit der Gewindespindel 11 entgegen den Kräften der Vorspannfeder 8 und der Kupplungsfeder 20 bis zum Lösen der Drehkupplung 9 relativ zum Gestängeteil 1 nach links verschoben werden. Die Feder 30 kann dabei entsprechend dem Übersetzungsverhältnis des Übersetzungshebels 25 schwächer als die Summe der von der Vorspannfeder 8 und der Kupplungsfeder 20 ausgeübten Kräfte, also im Vergleich zu diesen relativ schwach sein. Nach dem Lösen der Drehkupplung 9 und bei noch geöffneter Drehkupplung 10 versetzt die auf die Mutter 13 wirkende Spannung der Vorspannfeder 8 über das nichtselbsthemmende Gewinde 12 die Gewindespindel 11 mit dem Kupplungsflansch 6 in Drehung, derart, dass sich die Mutter 13 auf der Gewindespindel 11 gemäss Fig. 1 nach rechts verschraubt, wodurch das Gestängeteil 15 sich bis zum Anlegen der Fahrzeugbremsen relativ zum Gestängeteil 1 nach rechts verschiebt. Damit ist der Überschussanteil des Lösespiels der Fahrzeugbremse nachgestellt. Das Festziehen der Fahrzeugbremse, also der Festbremshub, erfolgt, wie vorstehend bereits beschrieben, unter Kompression der Feder 30.

Falls zu Beginn des Bremsvorganges das Lüftspiel der Reibungsbremse zu klein ist, legen sich die Bremsen an, bevor der Innenringflansch 34 am Bezugsteil 36 zur Anlage gelangt. Infolge des rasch anwachsenden Bewegungswiderstandes am Gestängeteil 15 wird bei Weiterbewegung des Gestängeteils 1 die Vorspannfeder 8 komprimiert und über die Mutter 13 und die Gewindespindel 11 wird der Kupplungsflansch 6 bis zum Lösen der Drehkupplung 9 entgegen der Kraft der Kupplungsfeder 20 relativ zum Rohransatz 5 nach links verschoben. Nach Lösen der Drehkupplung 9 verschraubt sich die Gewindespindel 11 unter der auf sie einwirkenden Kraft der Kupplungsfeder 20 relativ zur Mutter 13 nach rechts, derart, dass sie mitsamt dem Kupplungsflansch 6 der Weiterbewegung des Gestängeteils 1 nachfolgt. Die Gesamtlänge der Bremsgestänge-Nachstellvorrichtung wird durch dieses Verschrauben verlängert. Sobald der Innenringflansch 34 am Bezugsteil 36 anschlägt, wird durch die Feder 30 das Gehäuse 28 zurückgehalten und somit beim Weiterbewegen des Gestängeteils 1 der Übersetzungshebel 25 um den Querbolzen 24 im Uhrzeigersinn verschwenkt, bis über den Querbolzen 26, den Druckstössel 22, den Druckteller 21 und das Axiallager 19 der Kupplungsflansch 6 bis zum Schliessen der Drehkupplung 10 relativ zum Rohransatz 5 nach links verschoben ist. Über die Drehkupplung 10 wird sodann bei drehfest gehaltener Gewindespindel 11 die Bremskraft, wie bereits beschrieben, vom Gestängeteil 1 über die Mutter 13 auf das Gestängeteil 15 zum festen Zuspannen der Bremse übertragen. Während dieses Festbremshubes wird, wie bereits beschrieben, der Übersetzungshebel 25 über die Querbolzen 24 und 26 in unveränderter Drehlage mitgenommen, so dass auch das Gehäuse 28 des Federgliedes 29 unter Kompression der Feder 30 der Bewegung des Gestängeteils 1 folgt. Durch die erwähnte Verlängerung der Bremsgestänge-Nachstellvorrichtung wird das anfänglich zu kleine Lüftspiel der Fahrzeugbremse auf den Sollwert vergrössert.

Beim Lösen der Fahrzeugbremse erfährt in jedem Falle das Gestängeteil 1 eine Verschiebung entgegen der Richtung des Pfeils 3, wobei bis zum kraftlosen, blossen Anliegen der Fahrzeugbremsen die Drehkupplung 10 gekuppelt bleibt und über den seine Drehlage unverändert beibehaltenden Übersetzungshebel 25 das Gehäuse 28 unter Entspannen der Feder 30 mitgenommen wird, bis der Verschlussring 25 am Aussenringflansch 32 zur Anlage gelangt und die Feder 30 somit beiderseits über mit dem Gehäuse 28 verbundenen Teil abgefangen ist. Bei weiterer Verschiebung des Gestängeteils 1 nach links und in dieser Stellung gerade abklingender, auf das Gestängeteil 15 wirkender Zuspannkraft der Fahrzeugbremse vermögen die Federn 8 und 20 das Gestängeteil 15 mit der Mutter 13, der Gewindespindel 11 und dem Kupplungflansch 6 relativ zum Gestängeteil 1 gemäss Fig. 1 nach rechts zu verschieben, wobei sich die Drehkupplung 10 löst, die Drehkupplung 9 schliesst und über den Druckteller 21, den Druckstössel 22 und den Querbolzen 26 der Übersetzungshebel 25 um den Querbolzen 24 in die aus Fig. 1 ersichtliche Lage dreht. Beim weiteren, anschliessend erfolgenden Lüfthub der Fahrzeugbremsen werden alle Teile der Bremsgestänge-Nachstellvorrichtung mit Ausnahme des Bezugsteils 36 gemäss Fig. 1 nach links verschoben, bis zwischen dem Innenringflansch 34 und dem Bezugsteil 36 der Abstand 37 wieder erreicht ist. Damit ist der Lösevorgang abgeschlossen.

In Abänderung zum in Fig. 1 dargestellten Ausführungsbeispiel ist es selbstverständlich möglich, die nach Fig. 1 als Schraubenfeder ausgebildete Vorspannfeder 8 durch eine Luftfeder zu ersetzen: Der Ringraum 17 ist hierbei als ständig mit einer Druckluftquelle, beispielsweise dem Bremsluftbehälter des Fahrzeuges, in Verbindung stehender Zylinderraum auszubilden, die Mutter 13 vermittels einer an ihrem Aussenumfang angebrachten Kolbendichtung abgedichtet verschieblich in der Hülse 7 zu führen und zwischen dem Abschlussring 16 und dem Gestängeteil 15 ist nicht nur eine staubdichte, sondern eine druckdichte Abdichtung vorgesehen. Bei dieser Ausführung ist die ganze Länge der Hülse 7 als Federhubbereich für die pneumatische Vorspannfeder ausnutzbar und die Baulänge der Bremsgestänge-Nachstellvorrichtung kann demgemäss wesentlich verkürzt werden.

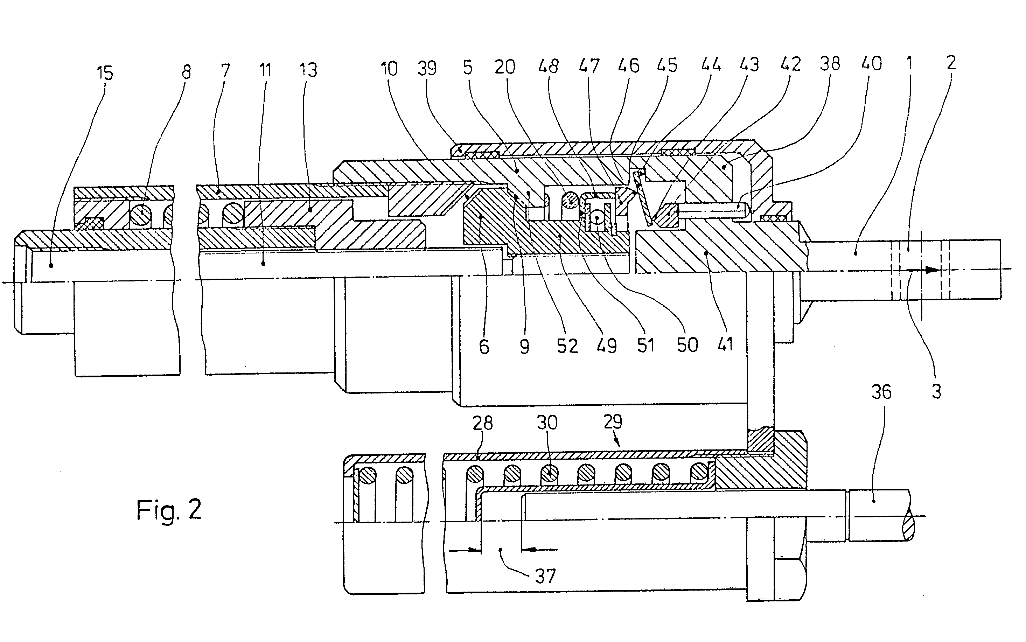

Um den äusseren, gegebenenfalls doppelt bzw. H-förmig ausgebildeten Übersetzungshebel 25 nach Fig. 1 zu vermeiden, kann die Bremsgestänge-Nachstellvorrichtung gemäss Fig. 2 auch mit einer inneren Übersetzungshebel-Einrichtung ausgestattet werden.

Bei der Bremsgestänge-Nachstellvorrichtung nach Fig. 2 ist auf dem über eine Radialwand 38 mit dem das Anschlussauge 2 aufweisenden Abschnitt des Gestängeteils 1 verbundenen Rohransatz 5 verschmutzungsgeschützt eine Muffe 39 axialverschieblich gelagert, welche zumindest in Wirkrichtung entgegen der Pfeilrichtung 3 fest mit dem Gehäuse 28 des im übrigen gleichartig zu Fig. 1 ausgebildeten Federgliedes 29 verbunden ist. An einem die Radialwand 38 übergreifenden Abschnitt der Muffe 39 liegen Stössel 40 an, die parallel zur Achsrichtung der Nachstellvorrichtung verlaufen, in der Radialwand 38 axialverschieblich gelagert sind und an einem innerhalb des Rohransatzes 5 auf einem Achsstummel 41 des Gestängeteils 1 axialverschieblich gelagerten Lagerring 42 anliegen. Auf der entgegen der Pfeilrichtung 3 liegenden Seite ist der Lagerring 42 mit einem Drahtring 43 versehen, der als radialinnere Lagerung für eine sich an ihrem radialäusseren Rand über einen weiteren Drahtring 44 in Pfeilrichtung 3 gegen den Rohransatz 5 abstützende Kegelringscheibe 45 dient. Die einen Übersetzungshebel darstellende Kegelringscheibe 45 ist in ihrem Kegelwinkel veränderlich; um hierbei nur geringe Verformungskräfte zu erfordern, ist die Kegelringscheibe 45 durch von ihren Rändern ausgehende Radialschlitze in einzelne, jedoch zusammenhängende Radialhebel aufgegliedert. Die radialen Schlitze der Kegelringscheibe 45 gehen dabei zweckmässig in Umfangsrichtung gesehen wechselnd vom radialinneren und radialäusseren Rand der Kegelringscheibe aus und erstrecken sich bis jeweils dicht
vor den anderen Rand. Entgegen der Pfeilrichtung 3 liegt die Kegelringscheibe 45 zum Drahtring 44 etwa nach radialinnen versetzt an einem
dritten Drahtring 46 an, der sich an einem axialverschieblich im Rohransatz 5 gelagerten Kupplungsring 47 befindet. Anderseits liegt am Kupplungsring 47 ein Rohrteil 48 an, welches ein auf
einem zylindrischen Ansatz 49 des Kupplungsflansches 6 gehaltenes Axiallager 50 verschieblich übergreift und mit einem radial nach innen
ragenden Ringflansch 51 endet. Das Axiallager 50
übernimmt hierbei die Funktionen der beiden
Axiallager 18 und 19 der Nachstellvorrichtung
nach Fig. 1. Die Kupplungsfeder 20 ist zwischen
einen zugleich ein Teil der Drehkupplung 9 bildenden Ringflansch 52 des Rohransatzes 5 und
den Ringflansch 51 derart eingespannt, dass letzterer gegen das Axiallager 50 gedrückt wird, welches sich über den Ansatz 49 und den Kupplungsflansch 6 über die geschlossene Drehkupplung 9 wieder gegen den Rohransatz 5 abstützt.
Im übrigen entspricht die Bremsgestänge-Nachstellvorrichtung nach Fig. 2 derjenigen nach
Fig. 1; zum Verdeutlichen sind in Fig. 2 einige
weitere Bezugszeichen eingesetzt, deren Bedeutung der Beschreibung zu Fig. 1 entnehmbar ist.

Die Funktion der Bremsgestänge-Nachstellvorrichtung nach Fig. 2 entspricht prinzipiell derjenigen, wie sie vorstehend zur Ausführung nach
Fig. 1 erläutert ist; lediglich die dortige Kraftübersetzung der von der Feder 30 auf die Drehkupplung 9 ausübbaren Entkupplungskraft durch den
Übersetzungshebel 25 erfolgt bei der Ausführung
nach Fig. 2 durch die Kegelringscheibe 45. Sobald während eines Bremshubes nach Überwinden des Abstandes 37 das Gehäuse 28 des Federgliedes 29 und damit die Muffe 39 durch das
Bezugsteil 36 über die Feder 30 zurückgehalten
werden, werden die Stössel 40 und der Lagerring
42 relativ zum Gestängeteil 1 gemäss Fig. 2 nach
links verschoben. Der Drahtring 43 drückt dabei
auf den radialinneren Rand der Kegelringscheibe
45, so dass deren Kegelwinkel vergrössert wird
bzw. sich deren zusammenhängende Radialhebel
um die Auflage am Drahtring 44 in Annäherungsrichtung an eine Radialebene drehen. Dabei werden der Drahtring 46 und der Kupplungsring 47
mit entsprechend dem durch die Radiusdifferenzen der Drahtringe 43, 44 und 46 bestimmten
Hebel- und Übersetzungsverhältnis vergrösserter
Kraft nach links gedrückt, so dass über das Rohrteil 48 und den Ringflansch 51 das Axiallager 50
von der Kraft der Kupplungsfeder 20 entlastet
wird und die Drehkupplung 9 sich durch geringe
Axialverschiebung des Kupplungsflansches 6 relativ zum Rohransatz 5 nach links löst. Die Kraftübersetzung an der Kegelringscheibe 45 bewirkt
also, dass die relativ schwache Feder 30 die
Drehkupplung 9 entgegen den Kräften der wesentlich stärkeren Kupplungsfeder 20 und Vorspannfeder lösen kann.

Abweichend zur Ausführung der Bremsgestän-
ge-Nachstellvorrichtung nach Fig. 2 kann es

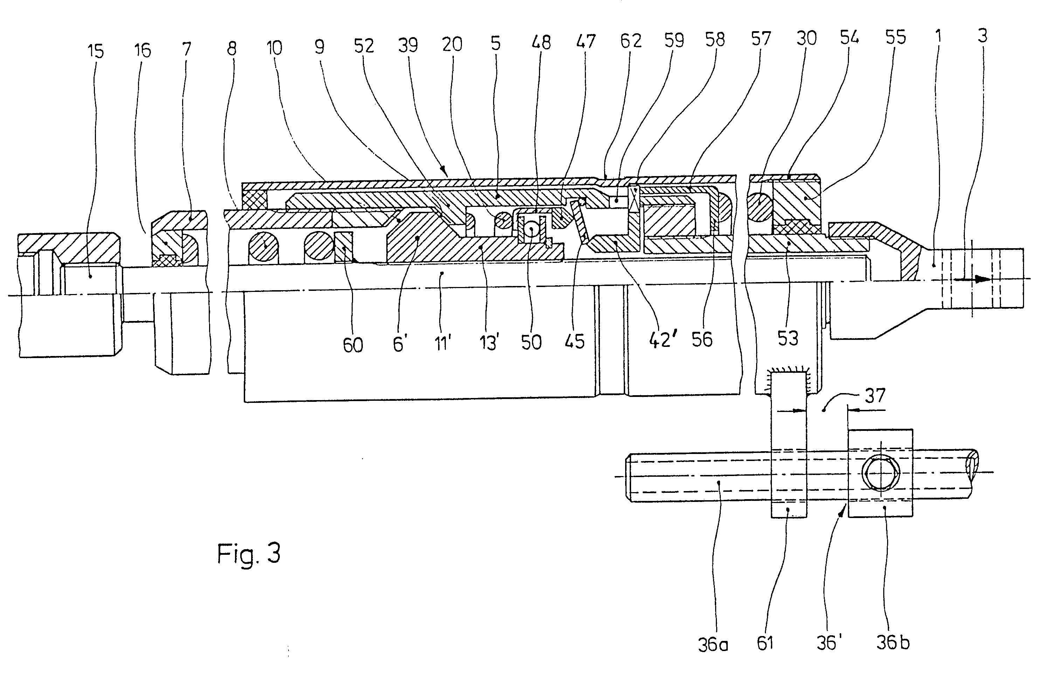

zweckmässig sein, zusätzlich zum Übersetzungshebel auch das Federglied der Steueranschlagvorrichtung in die Bremsgestänge-Nachstellvorrichtung integriert und zu dieser gleichachsig anzuordnen, wie in Fig. 3 dargestellt. Die aus der
Gewindespindel und der Mutter bestehende Verschraubung weist dabei eine vertauschte Anordnung hinsichtlich des drehfesten und des drehbaren Verschraubungsteils auf.

Nach Fig. 3 ist ein die Gewindespindel 11' teilweise aufnehmender Rohrabschnitt 53 des Gestängeteils 1 von der Feder 30' umgeben, welche
ihrerseits wiederum von einem Rohrabschnitt 54
der Muffe 39 überdeckt ist. Die Feder 30 ist dabei
zwischen einem den Rohrabschnitt 54 verschmutzungsgeschützt auf dem Rohrabschnitt 53
führenden Endring 55 am anschlussaugenseitigen Ende des Rohrabschnittes 54 und einem
Ringflansch 56 eingespannt. Der Ringflansch 56
ist mit einem Rohrabschnitt 57 verbunden, welcher axialverschieblich zwischen dem Rohransatz
5 des Gestängeteils 1 und der Muffe 39 geführt
ist. Im Rohransatz 5 befindet sich ein Lagerring
42', der die Gewindespindel 11' mit Spiel umgibt
und der radiale Arme 58 aufweist, welche Längsschlitze 59 des Rohransatzes 5 durchragen. An
den Armen 58 liegt anschlussaugenseitig das
Ende des Rohrabschnittes 57 an. Die Kegelringscheibe 45 stützt sich an ihrem radialinneren
Rand gegen den Lagerring 42'; in ihrem radialäusseren Bereich stützt sie sich, wie zu Fig. 2
beschrieben, gegen den Kupplungsring 47 und
an ihrem radialäusseren Rand gegen den Rohransatz 5 ab. Die Kupplungsfeder 20 ist, wie zu
Fig. 2 beschrieben, zwischen den Ringflansch 52
und das Axiallager 50 bzw. vermittels des Rohrteils 48 den Kupplungsring 47 eingespannt. Das
vom Rohrteil 48 überbrückte Axiallager 50 befindet sich auf der im Gegensatz zu den Ausführungen nach Fig. 1 und 2 hier das drehbare Verschraubungsteil darstellenden Mutter 13', welche
auch den Kupplungsflansch 6' trägt, der über die
Drehkupplungen 9 und 10 mit dem Rohransatz 5
und damit dem das drehfeste Teil darstellenden
Gestängeteil 1 kuppelbar ist. Die das drehfeste
Teil der Verschraubung darstellende Gewindespindel 11' ist fest mit dem Gestängeteil 15 verbunden. Die Vorspannfeder 8 ist zwischen dem
Abschlussring 16 der Hülse 7 und einem Ringflansch 60 zwischen der Gewindespindel 11' und
dem Gestängeteil 15 eingespannt.

Der Rohrabschnitt 54 der Muffe 39 trägt einen
auskragenden Ansatz 61, der in einer zur Nachstellvorrichtung achsparallelen Bohrung verschieblich von einem Stössel 36a durchsetzt ist,
auf welchem ein Anschlag 36b justierbar befestigt
ist. Der Stössel 36a bildet zusammen mit dem Anschlag 36b das Bezugsteil 36'; bei gelöster
Bremse steht der Anschlag 36b dem Ansatz 61 in
Richtung des Pfeils 3 mit dem Abstand 37 gegenüber.

Zum Abfangen der Vorspannung der Feder 30
ist die Muffe 39 gemäss Fig. 3 links der Arme 58
des Lagerringes 42' an ihrem Umfang mit sickenartigen Einkerbungen 62 versehen, über welche sie sich vermittels der Arme 48 gegen den Rohrabschnitt 57 abstützt.

Während des Bremshubes gelangt nach dem Sollhub der Ansatz 61 am Anschlag 36b zur Anlage, der Rohrabschnitt 54 mit der Muffe 39 wird zurückgehalten und die Feder 30 bewirkt über den Ringflansch 56, den Rohrabschnitt 57, die Arme 58, den Lagerring 42', die die Federkraft übersetzende Kegelringscheibe 45, den Kupplungsring 47 und das Rohrteil 48 ein Entlasten der Mutter 13' von der Kraft der Kupplungsfeder 20 sowie der Vorspannfeder 8, so dass sich die Drehkupplung 9 löst. Im übrigen entspricht die Funktion der Bremsgestänge-Nachstellvorrichtung nach Fig. 3 unter Beachten der Vertauschung von Gewindespindel 11' und Mutter 13' als drehfestes bzw. drehbares Verschraubungsteil der Funktion der Bremsgestänge-Nachstellvorrichtung nach Fig. 2; eine nochmalige Funktionsbeschreibung erübrigt sich daher.

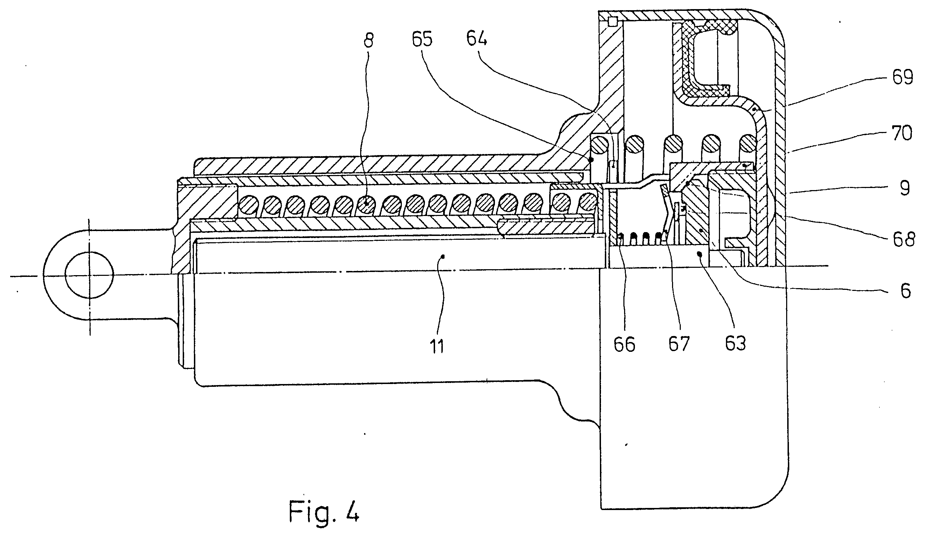

Der Bremszylinder mit eingebauter Bremsgestänge-Nachstellvorrichtung gemäss Fig. 4 entspricht in seiner allgemeinen Anordnung und Funktionsweise den aus der DE-B 2 201 082 bekannnten Bremszylindern und braucht daher hier nur in seinen für die vorliegende Erfindung wesentlichen Teilen beschrieben zu werden.

Auf einem zylindrischen Abschnitt 63 zwischen der das drehbare Verschraubungsteil darstellenden Gewindespindel 11 und dem Kupplungsflansch 6 ist axialverschieblich die biegesteif ausgebildete Steuerscheibe 64 gelagert, deren äusseren Randbereich in Bremsrichtung um den Sollhub versetzt der feste Gehäuseanschlag 65 gegenübersteht. Kolbenseitig liegt an der Steuerscheibe 64 eine den Abschnitt 63 mit geringem Abstand umgebende Druckfeder 66 an, welche sich anderseits gegen die radialinneren Enden von im wesentlichen radial verlaufenden Übersetzungshebeln 67 abstützt. Kolbenseitig liegt an den Übersetzunghebeln 67 in deren mittleren Bereich über ein Axiallager 68 der Kupplungsflansch 6 an; in ihrem radialäusseren Randbereich stützen sich die Übersetzungshebel 67 kolbenseitig gegen die mit dem Kolben 69 verbundene Hülse 70 ab. Die Übersetzungshebel 67 können ähnlich den vorstehend beschriebenen Kegelringscheiben 45 als zusammenhängende Ringscheibe ausgebildet sein. Beim Druckluftbeaufschlagen des Kolbens 69 gelangt nach dem Sollhub der Aussenrand der Steuerscheibe 64 zur Anlage am Gehäuseanschlag 65 und wird durch diesen zurückgehalten; die relativ schwache Druckfeder 66 vermag beim weiteren Kolbenhub durch die Kraftübersetzung an den Übersetzungshebeln 67 den Kupplungsflansch 6 entgegen der auf ihn wirkenden Kraft der Vorspannfeder zum Lösen der Drehkupplung 9 zwischen der kolbenabgewandten Seite des Kupplungsflansches 6 und der Hülse 70 zurückzuhalten. Während des weiteren Festbremshubes wird die Druckfeder 66 komprimiert; da sie relativ schwach ist, nimmt sie jedoch nur einen geringen Anteil der vom Kolben 69 ausgeübten Kraft auf und bietet damit die Voraussetzung für einen hohen Wirkungsgrad des Bremszylinders. Im übrigen entspricht der Aufbau und die Funktion des Bremszylinders nach Fig. 4 weitgehend den bekannten Anordnungen und braucht daher hier nicht beschrieben zu werden.

**Patentansprüche**

1. Selbsttätige Bremsgestänge-Nachstellvorrichtung für Fahrzeugbremsen, insbesondere Schienenfahrzeugbremsen, mit zwei teleskopisch zueinander verschiebbaren, die Bremskraft übertragenden Gestängeteilen (1, 15) und einer Verbindungsvorrichtung zwischen diesen, wobei die Verbindungsvorrichtung eine eine Gewindespindel (11, 11') und wenigstens eine mit dieser über ein nichtselbsthemmendes Gewinde (12) verschraubte Mutter (13, 13') umfassende Verschraubung mit einem undrehbar und einem drehbar gelagerten Verschraubungsteil aufweist, wobei zwischen das drehbare Verschraubungsteil (11, 13') und ein drehfestes Teil (Gestängeteil 1) eine in Schliessrichtung von wenigstens einer Feder (8 und/oder 20) belastete, durch Axialverschiebung des drehbaren Verschraubungsteils (11, 13') relativ zum drehfesten Teil (Gestängeteil 1) schaltbare Drehkupplung (9) eingeordnet ist, und wobei das drehbare Verschraubungsteil (11, 13') in Verschieberichtung zum Öffnen der Drehkupplung (9) mit einer entgegen der Bremskraftrichtung (Pfeil 3) wirkenden, sich nach einem Sollhub (Abstand 37) schliessenden, ein Federglied (30, 66) und eine Hebeleinrichtung (25, 45, 67) aufweisenden Steueranschlageinrichtung koppelbar ist, die sich an einem proportional dem Bremshub relativ zu dem drehbaren Verschraubungsteil verschieblichen Bezugsteil (36, 36', 65) abstützt, dadurch gekennzeichnet, dass im Kraftfluss der Steueranschlageinrichtung vom Bezugsteil (36, 36', 65) zum drehbaren Verschraubungsteil (Gewindespindel 11, Mutter 13') wenigstens ein dem Federglied (30, 66) nachgeordneter Übersetzungshebel (25, Kegelringscheibe (45, 67) mit einem die vom Federglied auf das drehbare Verschraubungsteil übertragbare Kraft vergrössernden Übersetzungsverhältnis vorgesehen ist.

2. Bremsgestänge-Nachstellvorrichtung nach Anspruch 1, dadurch gekennzeichnet, dass der Übersetzungshebel (25, Kegelringscheibe 45) mittel- oder unmittelbar mit seinem einen Ende am Federglied (30), seinem anderen Ende am drehfesten Teil (Gestängeteil 1) und dazwischen am drehbaren Verschraubungsteil (Gewindespindel 11, Mutter 13') gelagert ist.

3. Bremsgestänge-Nachstellvorrichtung nach Anspruch 2, dadurch gekennzeichnet, dass der Übersetzungshebel (25) zwischen den Lagerungen am Federglied (30) und am drehbaren Verschraubungsteil (Gewindespindel 11) eine grössere und zwischen der Lagerung am drehbaren Verschraubungsteil (11) und dem drehfesten Teil (Gestängeteil 1) eine kleinere Hebellänge aufweist.

4. Bremsgestänge-Nachstellvorrichtung nach Anspruch 3, dadurch gekennzeichnet, dass das Federglied (30) als vorgespannter Federzylinder zu den Gestängeteilen (1, 15) parallel neben diesen angeordnet ist, dass das Eingangsglied des Federspeichers über eine ein dem Sollhub proportionales Spiel (37) aufweisende Anschlagkupplung (34, 36) mit dem Bezugsteil (36) gekoppelt und das Ausgangsglied (Gehäuse 28) des Federspeichers an einem Ende des zu diesem im wesentlichen senkrecht verlaufenden Übersetzungshebels (25) angelenkt ist, dass das andere Ende des Übersetzungshebels (25) am drehfest gehaltenen, einen Gestängeteil (1) angelenkt ist, und dass zwischen diesen beiden Anlenkungen der Übersetzungshebel (15) mit einem im Gestängeteil (1) axialverschieblich gelagerten und in Wirkverbindung mit dem drehbaren Verschraubungsteil (Gewindespindel 11) stehenden Druckstössel (22) gekoppelt ist (Fig. 1).

5. Bremsgestänge-Nachstellvorrichtung nach Anspruch 4, dadurch gekennzeichnet, dass der Druckstössel (22) einerseits an einem mit dem Übersetzungshebel (25) verbundenen Querbolzen (26), der das Stangenteil (1) in einem zu diesem quer verlaufenden Langloch (4) verschieblich durchsetzt, und anderseits an einem sich gegen das drehbare Verschraubungsteil (Gewindespindel 11) abstützenden Axiallager (19) mittel- oder unmittelbar anliegt (Fig. 1).

6. Bremsgestänge-Nachstellvorrichtung nach Anspruch 2, dadurch gekennzeichnet, dass der Übersetzungshebel als zu dem drehbaren Verschraubungsteil (Gewindespindel 11, Mutter 13') koaxiale Kegelringscheibe (45) mit veränderlichem Kegelwinkel ausgebildet ist, die an ihren beiden Rändern mittel- oder unmittelbar am Federglied (30) bzw. am einen, das drehfeste Teil bildenden Gestängeteil (1) und zwischen den Rändern am drehbaren Verschraubungsteil (11, 13') gelagert ist, wobei die Lagerstellen koaxial zum Verschraubungsteil ringförmig ausgebildet sind (Fig. 2, 3).

7. Bremsgestänge-Nachstellvorrichtung nach Anspruch 6, dadurch gekennzeichnet, dass die Lagerstellen der Kegelringscheibe (45) als an dieser anliegende Drahtringe (43, 44, 46) ausgebildet sind.

8. Bremsgestänge-Nachstellvorrichtung nach Anspruch 6, dadurch gekennzeichnet, dass die Kegelringscheibe (45) radiale, von einem Rand ausgehende und bis nahe zum anderen Rand reichende Schlitze aufweist.

9. Bremsgestänge-Nachstellvorrichtung nach Anspruch 8, dadurch gekennzeichnet, dass in Umfangsrichtung gesehen aufeinanderfolgende Schlitze abwechselnd vom radial inneren und vom radial äusseren Rand ausgehen.

10. Bremsgestänge-Nachstellvorrichtung nach Anspruch 6, dadurch gekennzeichnet, dass das Federglied (30) als vorgespannter Federspeicher zu den Gestängeteilen (1, 15) parallel neben diesen angeordnet ist, dass das Eingangsglied des Federspeichers über eine ein dem Sollhub proportionales Spiel (37) aufweisende Anschlagkupplung mit dem Bezugsteil (36) gekoppelt und das Ausgangsglied (Gehäuse 28) des Federspeichers mit einer an wenigstens einem der Gestängeteile (1) axialverschieblich gelagerten Muffe (39) verbunden ist, und dass die Muffe (39) mit einer randnahen Lagerstelle der Kegelringscheibe (45) gekoppelt ist (Fig. 2).

11. Bremsgestänge-Nachstellvorrichtung nach Anspruch 10, dadurch gekennzeichnet, dass die Muffe (39) auf dem das drehfeste Teil bildenden Gestängeteil (1) axialverschieblich gelagert und mittels eine Radialwand (38) axialverschieblich durchsetzenden Stösseln (40) mit einem im Gestängeteil (1) axialverschieblich gelagerten Lagerring (42) gekoppelt ist, wobei der Lagerring (42) die nahe des radialinneren Randes der Kegelringscheibe (45) befindliche Lagerstelle bildet (Fig. 2).

12. Bremsgestänge-Nachstellvorrichtung nach Anspruch 6, dadurch gekennzeichnet, dass auf wenigstens einem der Gestängeteile (1) eine über eine ein dem Sollhub proportionales Spiel (37) aufweisende Anschlagkupplung (61, 36b) mit dem Bezugsteil (36') koppelbare Muffe (39) axialverschieblich gelagert ist, dass in einem Ringraum zwischen der Muffe (39) und dem Gestängeteil (1) eine vorgespannte Feder (30) angeordnet ist, die sich einerseits gegen die in Wirkrichtung der Feder (30) gegen das Gestängeteil (1) mittels eines Anschlages (62) abgefangene Muffe (39) und anderseits gegen einen zum Gestängeteil (1) axialverschieblichen Lagerring (42') abstützt, der eine randnahe Lagerstelle der Kegelringscheibe (45) bildet (Fig. 3).

13. Bremsgestänge-Nachstellvorrichtung nach Anspruch 11 oder 12, wobei das drehbare Verschraubungsteil ein Axiallager trägt, das von einer in Schliessrichtung der Drehkupplung wirkenden Feder belastbar ist, dadurch gekennzeichnet, dass an der auf der federabgewandten Seite des Axiallagers (50) angeordneten Kegelringscheibe (45) zwischen deren Randbereichen ein weiterer, relativ zum Gestängeteil axialverschieblicher Kupplungsring (47) anliegt, der mit einem das Axiallager (50) axial verschieblich übergreifenden Rohrteil (48) gekoppelt ist, dessen Ende einen zwischen die Feder (20) und das Axiallager (50) eingreifenden Ringflansch (51) trägt (Fig. 2, 3).

**Claims**

1. An automatic brake rodding adjustment device for vehicle brakes, in particular rail vehicle brakes, with two telescopically connected rod sections (1, 15) which transmit the brake force, and between them a connecting device, the said connecting device possessing a screw connection with one pivoting and one non-pivoting screw section, the screw connection comprising a screw (11, 11') and not less than one nut (13, 13') which is fastened to the aforementioned screw by way of a non-selflocking thread (12), a swivel coupling (9) which is loaded by at least one spring (8 and/or 20) in the direction of closure and which can be adjusted in relation to the non-pivoting section (rod section 1) by the axial movement of the pivoting screw section (11, 13') being arranged between the pivoting screw section (11, 13') and a non-pivoting section (rod section 1), whereby the pivoting screw section (11, 13') can be connected in the direction of movement, in order to open the swivel coupling (9), to a control stop device which operates against the direction of the brake force (arrow 3), closes after a nominal stroke (clearance 37) and possesses both a spring (30, 66) and a lever device (25, 45, 67), the aforementioned control stop device bearing against a reference section (36, 36', 65) which can be moved proportionally to the brake stroke relative to the pivoting screw section, possessing the characteristic feature that at least one transmission lever (25, tapered ring 45, 67) following the spring, with a transmission ratio which increases the force that can be transferred from the spring to the pivoting screw section, is provided in the direction of force of the control stop device from the reference section (36, 36', 65) to the pivoting screw section (screw 11, nut 13').

2. A brake rodding adjustment device as claimed in claim 1, possessing the characteristic feature that the transmission lever (25, tapered ring 45) is installed directly or indirectly with one end mounted on the spring (30), the opposite end mounted on the non-pivoting section (rod section 1) and the intervening portion mounted on the pivoting screw section (screw 11, nut 13').

3. A brake rodding adjustment device as claimed in claim 2, possessing the characteristic feature that the transmission lever (25) has a greater length between the bearings on the spring (30) and on the pivoting screw section (screw 11) and a lesser length between the bearing on the pivoting screw section (11) and the non-pivoting section (rod section 1).

4. A brake rodding adjustment device as claimed in claim 3, possessing the characteristic feature that the spring (30) is designed as a prestressed spring cylinder arranged parallel to the rod sections (1, 15), that the input element of the spring-loaded cylinder is connected to the reference section (36) by way of a stop coupling (34, 36) with a play which is in proportion to the nominal stroke, and the output element (housing 28) of the spring-loaded cylinder is hinged to one end of the aforementioned transmission lever (25), which in essence is positioned vertically thereto, in such a manner that the opposite end of the transmission lever (25) is pivoted on the non-pivoting rod section (1) and that between these two pivotal arrangements the transmission lever (25) is linked to a tappet (22) movable about its longitudinal axis, which is mounted in the rod section (1) and which interacts with the pivoting screw section (screw 11) (Fig. 1).

5. A brake rodding adjustment device as claimed in claim 4, possessing the characteristic feature that the tappet (22) is in either direct or indirect contact on the one hand with a crossbolt (26), which is linked to the transmission lever (25) and which pushes the rod section (1) in an oblong hole running at right angles thereto, and on the other hand with a journal bearing (19) which bears against the pivoting screw section (screw 11) (Fig. 1).

6. A brake rodding adjustment device as claimed in claim 2, possessing the characteristic feature that the transmission lever is configured as a tapered ring (45) coaxial with the pivoting screw section (screw 11, nut 13'), with a variable taper angle, the said tapered ring being mounted at both edges either directly or indirectly on the spring (30), or alternatively on the rod section (1) which forms the non-pivoting section and between the edges on the pivoting screw section (11, 13'), the bearing points being ring-shaped and coaxial with the screw section (Figs. 2, 3).

7. A brake rodding adjustment device as claimed in claim 6, possessing the characteristic feature that the bearing points of the tapered ring (45) are arranged as wire rings (43, 44, 46) which are in contact with the said tapered ring.

8. A brake rodding adjustment device as claimed in claim 6, possessing the charateristic feature that the tapered ring (45) has radial slots which radiate from one edge and reach almost to the other edge.

9. A brake rodding adjustment device as claimed in claim 8, possessing the characteristic feature that successive slots, viewed circumferentially, originate alternately from the radially internal and from the radially external edge.

10. A brake rodding adjustment device as claimed in claim 6, possessing the characteristic feature that the spring (30) is designed as a prestressed spring-loaded cylinder arranged parallel to the rod sections (1, 15), that the input element of the spring-loaded cylinder is connected to the reference section (36) by way of a stop coupling with a play which is in proportion to the nominal stroke, and the output element (housing 28) of the spring-loaded cylinder is connected to a sleeve (39) mounted movably about its longitudinal axis on at least one of the rod sections (1), and that the aforementioned sleeve (39) is connected to a bearing point on the tapered ring (45) which is close to the edge (Fig. 2).

11. A brake rodding adjustment device as claimed in claim 10, possessing the characteristic feature that the sleeve (39) is mounted movably about its longitudinal axis on the rod section (1) which forms the non-pivoting section and is connected to a bearing ring (42) mounted movably about its longitudinal axis in the rod section (1) by means of tappets (40) bearing movably about their longitudinal axis on a radial wall (38), whereby the bearing ring (42) forms the bearing point adjacent to the inside radial edge of the patered ring (45) (Fig. 2).

12. A brake rodding adjustment device as claimed in claim 6, possessing the characteristic feature that a sleeve (39), which can be connected to the reference section (36') by way of a stop coupling (61, 36b) with a play in proportion to the nominal stroke, is mounted movably about its longitudinal axis on at least one of the rod sections (1), in such a manner that a prestressed spring (30) which is arranged in an annular space between the aforementioned sleeve (39) and the rod section (1) bears on the one hand against the sleeve (39), which is held by a stop (62) against the rod section (1) in the direction of operation of the spring (30) and on the other hand against a bearing ring (42') movable about its longitudinal axis in relation to the rod section (1), the bearing ring (42') forming a bearing point on the tapered ring (45) which is close to the edge (Fig. 3).

13. A brake rodding adjustment device as claimed in claim 11 or 12, in which the pivoting screw section supports a journal bearing to which a spring acting in the direction of closure of the rotary coupling can be applied, possessing the characteristic feature that an additional coupling ring (47) which is movable about its longitudinal axis in relation to the rod section is located between the boundary areas of the tapered ring (45) on the side of the axial bearing (50) remote from the spring, the aforementioned coupling ring being connected to a tube section (48) protruding on the axial bearing (50) movably about its longitudinal axis, the end of the said tube section bearing an annular flange (51) which engages between the spring (20) and the axial bearing (50) (Figs. 2, 3).

**Revendications**

1. Régleur automatique de timonerie à rattrapage du jeu pour freins de véhicules, notamment pour freins de véhicules sur rails, comprenant deux éléments de timonerie (1, 15) télescopiquement mobiles entre eux et servant à transmettre la force de freinage, ainsi qu'un dispositif de liaison entre ces deux éléments, du type dans lequel le dispositif de liaison comporte une liaison par vissage comprenant une broche filetée (11, 11') et au moins un écrou (13, 13') vissé sur cette dernière au moyen d'un filetage non autobloquant (12) et pourvue d'un élément de vissage monté de façon à ne pouvoir tourner et d'un élément de vissage monté à rotation, dans lequel il est prévu, entre l'élément de vissage (11, 13') monté à rotation et un élément (élément de timonerie 1) empêché de tourner, un accouplement de rotation (9) chargé en position embrayée par au moins un ressort (8 et/ou 20) et commandé par déplacement axial de l'élément de vissage (11, 13') capable de tourner par rapport à l'élément empêché de tourner (élément de timonerie 1), et dans lequel l'élément de vissage (11, 13') capable de tourner est susceptible d'être accouplé, dans la direction du déplacement correspondant au débrayage de l'accouplement tournant (9), à un dispositif à butée de commande comportant un élément de ressort (30, 66) et un dispositif à leviers (25, 45, 67), agissant en sens inverse de la force de freinage (flèche 3) et se fermant après une course de consigne (distance 37), ledit dispositif à butée de commande s'appuyant sur une pièce de référence (36, 36', 65) se déplaçant proportionnellement à la course du frein par rapport à l'élément de vissage tournant, caractérisé par le fait que dans le flux de force du dispositif à butée de commande, entre la pièce de référence (36, 36', 65) et l'élément de vissage tournant (broche filetée 11, écrou 13'), est prévu un levier de transmission multiplicateur (25, anneau conique 45, 67) disposé en aval de l'élément à ressort et présentant un rapport de transmission augmentant la force susceptible d'être transmise de l'élément à ressort à l'élément de vissage tournant.

2. Régleur automatique de timonerie selon la revendication 1, caractérisé par le fait que le levier de transmission multiplicateur (25, anneau conique 45) est monté, indirectement ou directement, par une de ses extrémités sur l'élément de ressort (30), par son autre extrémité sur l'élément empêché de tourner (élément de timonerie 1) et entre ses extrémités sur l'élément de vissage tournant (broche 11, écrou 13').

3. Régleur automatique de timonerie selon la revendication 2, caractérisé par le fait que le levier de transmission multiplicateur (25) possède entre les points d'articulation sur l'élément à ressort (30) et sur l'élément de vissage tournant (broche filetée 11) un bras de levier grand, et, entre le point d'articulation avec l'élément de vissage tournant (11) et l'élément empêché de tourner (élément de timonerie 1), un bras de levier plus court.

4. Régleur automatique de timonerie selon la revendication 3, caractérisé par le fait que l'élément à ressort (30), réalisé sous la forme d'un cylindre à ressort précontraint, est disposé parallèlement aux éléments de timonerie (1, 15), dans le voisinage de ces derniers, que l'élément d'entrée de l'accumulateur à ressort est accouplé sur la pièce de référence (36) par l'intermédiaire d'un accouplement à butée (34, 36) possédant un jeu (37) qui est proportionnel à la course de consigne, alors que l'élément de sortie (carter 28) de l'accumulateur à ressort est articulé avec une extrémité dudit levier de transmission (25) qui est sensiblement perpendiculaire audit élément de sortie, que l'autre extrémité dudit levier de transmission (25) est articulée sur l'élément de timonerie (1) empêché de tourner, et qu'entre ces deux articulations, ledit levier de transmission (25) est accouplé à un poussoir de pression (22) axialement mobile dans l'élément de timonerie (1) et coopérant avec l'élément de vissage tournant (broche filetée 11).

5. Régleur automatique de timonerie selon la revendication 4, caractérisé par le fait que le poussoir de pression (22) porte indirectement ou directement d'une part contre un boulon transversal (26) relié audit levier de transmission (25) et traversant l'élément de timonerie (1) dans une boutonnière (4) transversale à ce dernier, et d'autre part contre un palier axial (19) qui porte contre l'élément de vissage tournant (broche filetée 11).

6. Régleur automatique de timonerie selon la revendication 2, caractérisé par le fait que ledit levier de transmission (25) est réalisé sous la forme d'une rondelle conique (45) d'angle au sommet variable et coaxiale avec l'élément de vissage tournant (broche filetée 11, écrou 13'), rondelle conique qui est montée par ses deux bords, indirectement ou directement, sur l'élément à ressort (30) ou sur l'élément de timonerie (1) constituant l'élément empêché de tourner, et entre ses bords sur l'élément de vissage tournant (11, 13'), alors que les points de montage sont annulaires et coaxiaux avec l'élément de vissage (figures 2, 3).

7. Régleur automatique de timonerie selon la revendication 6, caractérisé par le fait que les points de montage de l'anneau conique (45) sont réalisés sous la forme d'anneaux fil métallique (43, 44, 46) portant contre l'anneau ou rondelle conique.

8. Régleur automatique de timonerie selon la revendication 6, caractérisé par le fait que la rondelle conique (45) comporte des fentes radiales partant d'un bord et s'étendant jusqu'au voisinage de l'autre bord.

9. Régleur automatique de timonerie selon la revendication 8, caractérisé par le fait que circonférentiellement les fentes successives partent alternativement du bord radialement intérieur et du bord radialement extérieur.

10. Régleur automatique de timonerie selon la revendication 6, caractérisé par le fait que l'élément à ressort (30), réalisé sous la forme d'un cylindre à ressort précontraint, est disposé parallèlement aux éléments de timonerie (1, 15), dans le voisinage de ces derniers, que l'élément d'entrée de l'accumulateur à ressort est accouplé avec la pièce de référence (36) par l'intermédiaire d'un accouplement à butée (34, 36) possédant un jeu (37) qui est proportionnel à la course de consigne, alors que l'élément de sortie (carter 28) de l'accumulateur à ressort est relié à un manchon (39) monté à déplacements axiaux sur au moins l'un des éléments de timonerie (1), et que le manchon (39) est accouplé à un palier de montage de l'anneau conique (45), proche du moyen (figure 2).

11. Régleur automatique de timonerie selon la revendication 10, caractérisé par le fait que le manchon (39) est monté à déplacements axiaux sur l'élément de timonerie (1) formant l'élément empêché de tourner, et il est accouplé, au moyen de poussoirs traversant avec mobilité axiale une paroi radiale (38), à une bague de palier (42) montée à déplacements axiaux dans l'élément de timonerie (1), ladite bague de palier (42) formant les paliers de montage situés près du bord radialement intérieur de l'anneau conique (45).

12. Régleur automatique de timonerie suivant la revendication 6, caractérisé par le fait que sur au moins l'un des éléments de timonerie (1) est monté, à déplacements axiaux, un manchon (39) susceptible d'être accouplé à la pièce de référence (36') par l'intermédiaire d'un accouplement à butée (61, 36b) présentant un jeu proportionnel à la course de consigne, que dans un espace annulaire entre le manchon (39) et l'élément de timonerie (1) est disposé un ressort armé (30) qui prend appui d'une part contre le manchon arrêté par une butée (62) dans la direction de l'action du ressort (30) sur l'élément de timonerie, et, d'autre part, contre une bague de palier (42') déplaçable axialement par rapport à l'élément de timonerie (1), et constituant le palier de montage de l'anneau conique (45) qui est voisin du bord.

13. Régleur automatique de timonerie selon la revendication 11 ou 12, dans lequel l'élément de vissage tournant porte un palier axial susceptible d'être chargé par un ressort agissant dans le sens de l'embrayage de l'accouplement tournant, caractérisé par le fait que sur l'anneau conique (45) disposé sur le côté du palier axial (50) qui est éloigné du ressort, porte, entre leurs zones périphériques, une autre bague d'accouplement (47) mobile axialement par rapport à l'élément de timonerie et accouplée à une pièce tubulaire (48) coulissant axialement sur le palier axial et dont l'extrémité porte un flasque annulaire (51) s'engageant entre le ressort (20) et le palier axial (50).

Bezugszeichenliste

| | |
|---|---|
| 1 | Gestängeteil |
| 2 | Anschlussauge |
| 3 | Pfeil |
| 4 | Langloch |
| 5 | Rohransatz |
| 6 | Kupplungsflansch |
| 6′ | Kupplungsflansch |
| 7 | Hülse |
| 8 | Vorspannfeder |
| 9 | Drehkupplung |
| 10 | Drehkupplung |
| 11 | Gewindespindel |
| 11′ | Gewindespindel |
| 12 | Gewinde |
| 13 | Mutter |
| 13′ | Mutter |
| 14 | Rohr |
| 15 | Gestängeteil |
| 16 | Abschlussring |
| 17 | Ringraum |
| 18 | Axiallager |
| 19 | Axiallager |
| 20 | Kupplungsfeder |
| 21 | Druckteller |
| 22 | Druckstössel |
| 23 | Lagerauge |
| 24 | Querbolzen |
| 25 | Übersetzungshebel |
| 26 | Querbolzen |
| 27 | Lagerbolzen |
| 28 | Gehäuse |
| 29 | Federgliedes |
| 30 | Feder |
| 31 | Boden |
| 32 | Aussenringflansch |
| 33 | Rohrteil |
| 34 | Innenringflansch |
| 35 | Verschlussring |
| 36 | Bezugsteil |
| 36′ | Bezugsteil |
| 36a | Stössel |
| 36b | Anschlag |
| 37 | Abstand |
| 38 | Radialwand |
| 39 | Muffe |
| 40 | Stössel |
| 41 | Achsstummel |
| 42 | Lagerring |
| 42′ | Lagerring |
| 43 | Drahtring |
| 44 | Drahtring |
| 45 | Kegelringscheibe |
| 46 | Drahtring |
| 47 | Kupplungsring |
| 48 | Rohrteil |
| 49 | Ansatz |
| 50 | Axiallager |
| 51 | Ringflansch |
| 52 | Ringflansch |
| 53 | Rohrabschnitt |
| 54 | Rohrabschnitt |
| 55 | Endring |
| 56 | Ringflansch |
| 57 | Rohrabschnitt |
| 58 | Arm |
| 59 | Längsschnlitz |
| 60 | Ringflansch |
| 61 | Ansatz |
| 62 | Einkerbung |
| 63 | Abschnitt |
| 64 | Steuerscheibe |
| 65 | Gehäuseanschlag |
| 66 | Druckfeder |
| 67 | Übersetzungshebel |
| 68 | Axiallager |
| 69 | Kolben |
| 70 | Hülse |

Fig. 1

Fig. 2

0 014 417

15  16  7  8  10  9  52  39  20  5  48  47  62  59  58  57  30  54  55  1  3

Fig. 3

60  6'  11'  13'  50  45  42'  56  53

37

36a  61  36'  36b

19

0 014 417

Fig. 4